# EUROPÄISCHE PATENTSCHRIFT

(11) **EP 3 260 697 B1**
(45) Veröffentlichungstag und Bekanntmachung des Hinweises auf die Patenterteilung: **18.01.2023**
(21) Anmeldenummer: 17176048.1
(22) Anmeldetag: 14.06.2017
(51) Int. Cl.: F03D 1/06

(54) **HINTERKANTENGURT MIT RECHTECKQUERSCHNITT**
TRAILING-EDGE GIRDER WITH RECTANGULAR CROSS SECTION
SANGLE DE BORD ARRIÈRE COMPRENANT UNE FENTE À SECTION TRANSVERSALE

(30) Priorität: 24.06.2016 DE 102016007675
(43) Veröffentlichungstag der Anmeldung: 27.12.2017
(73) Patentinhaber: Siemens Gamesa Renewable Energy Service GmbH, 20097 Hamburg (DE)
(72) Erfinder: BENDEL, Urs, 24787 Fockbek (DE); WERNER, Markus, 24242 Felde (DE); RAMM, Julian, 24105 Kiel (DE); EYB, Enno, 24116 Kiel (DE); ZELLER, Lenz, 24242 Felde (DE)
(74) Vertreter: Groth, Wieland

(56) Entgegenhaltungen:
- CA-A1- 2 738 123
- DE-A1-102012 019 351
- DE-A1-102014 221 966
- US-A1- 2009 169 392
- US-A1- 2011 008 175
- US-A1- 2011 206 529
- US-A1- 2012 141 282
- US-A1- 2014 301 859

## Beschreibung

Die Erfindung betrifft ein Rotorblatt gemäß Anspruch 1 und ein Verfahren zur Fertigung eines Rotorblattes gemäß Anspruch 10.

Rotorblätter für Windenergieanlagen sind im Stand der Technik natürlich hinlänglich bekannt. In der DE 10 2012 107 932 B4 ist ein Rotorblatt offenbart, das aus einem Faserverbundsystem besteht. Dabei werden Rotorblatthalbschalen zunächst gefertigt und aufeinander geklebt. Zur Stabilisierung der Rotorblatthalbschale in Schlagrichtung, also senkrecht zur Schwenkrichtung, bzw. Rotorebene, in die sich das Rotorblatt dreht, sind zwischen den Rotorblatthalbschalen Stege vorgesehen, die über Gurte mit den Rotorblatthalbschalen verklebt sind. Gurte und Stege bilden im Querschnitt einen Doppel-T-Träger aus. In Rotorblättern ist an den Rotorblatthalbschalen jeweils ein Hauptgurt vorgesehen, der im Wesentlichen entlang der Linie der größten Profilhöhen verläuft. Die gegenüberliegenden Hauptgurte sind über einen Steg miteinander verbunden.

Aus der US 2014/0301859 A1 ist ein Rotorblatt mit in die Rotorblatthalbschalen integrierten Hauptgurten bekannt.

Aus der CA 2 738 123 ist ein Rotorblatt mit Hauptgurten bekannt und entlang der Hinterkante verlaufenden Verstärkungsabschnitten.

In der US 2009/0169392 A1 sind wiederum in die Rotorblatthalbschalen integrierte Hauptgurte beschrieben, die über Hauptstege miteinander in Verbindung stehen.

Die DE 10 2014 221 966 A1 betrifft Rotorblätter mit in die Rotorblatthalbschale integrierten Haupt- und Hinterkantengurten.

In der US 2012/0141282 A1 ist ein Rotorblatt mit in die Rotorblatthalbschalen integrierten Hauptgurten beschrieben, die über Hauptstege miteinander in Verbindung stehen.

In der US 2011/008175 A1 ist ein Rotorblatt mit zwei parallel zueinander verlaufenden Stegen offenbart, die etwa mittig in der Rotorblattschale angeordnet sind.

In der DE 10 2012 019 351 A1 ist ein Verfahren zum Zusammenfügen eines Windenergieanlagenrotorblattes aus einem blattwurzelseitigen Segment und einem blattspitzenseitigen Segment bekannt, wobei ein Doppelsteg mittig und ein Steg entlang der Rotorblatthinterkante verläuft.

Die US 2011/0206529 A1 offenbart ein Rotorblatt mit einem im Rotorblattinnenraum einteilig ausgebildeten Doppelsteg sowie einem zwischen dem Doppelsteg und der Rotorblatthinterkante angeordneten abgewinkelten Steg.

Des Weiteren entspricht es dem Stand der Technik, in Rotorblättern für Windkraftanlagen Gurte aus im Wesentlichen in Richtung der Längsrichtung des Rotorblattes verlaufenden Fasern vorzusehen, die unmittelbar entlang der Hinterkante des Rotorblattes platziert werden. Dabei weisen beide Halbschalen, die Bestandteil des Rotorblattes sind, je einen Hinterkantengurt auf, die dann entsprechend dem Stand der Technik entlang der Hinterkante direkt miteinander verklebt werden.

Nachteilig an den bekannten Rotorblättern ist die Tatsache, dass mehr Material für die Ausbildung des Hinterkantengurtes verwendet werden muss, als für die Erfüllung der Steifigkeitsanforderungen notwendig wäre, da diese dem Stand der Technik entsprechende Konfiguration sehr stark zu einer Beulinstabilität neigt, wenn die Hinterkante des Rotorblattes auf Druck belastet wird. Daher müssen zusätzliche Lagen von Faserhalbzeugen eingebracht werden, um die geforderte Sicherheit gegen Beulen zu erreichen. Da aber der Abstand zwischen der Oberfläche der aerodynamischen Druckseite des Rotorblattes und seiner aerodynamischen Saugseite gering ist, ist auch der Steineranteil, den jede zusätzliche Lage von Faserhalbzeug verursacht, gering. Daher ist die Effektivität zusätzlicher Lagen von Faserhalbzeugen in der Hinterkante zur Erhöhung der Sicherheit gegen Beulinstabilitäten sehr gering, und es wird eine sehr große zusätzliche Anzahl von Lagen von Faserhalbzeugen benötigt, was das Rotorblatt unnötig teuer macht.

Es ist daher Aufgabe der vorliegenden Erfindung, ein Rotorblatt der eingangs genannten Art dahingehend zu verbessern, dass bei gleicher Sicherheit gegen Beulinstabilität und bei gleichen äußeren Abmessungen des Rotorblattes weniger Material verbraucht wird.

Es ist des Weiteren Aufgabe der vorliegenden Erfindung, ein Verfahren zur Verfügung zu stellen, mit dessen Hilfe ein erfindungsgemäßes Rotorblatt gefertigt werden kann.

Hinsichtlich des Rotorblattes wird die Aufgabe durch ein eingangs genanntes Rotorblatt mit den Merkmalen des Anspruchs 1 gelöst.

Das erfindungsgemäße Rotorblatt weist zwei jeweils in einem Laminierverfahren hergestellte Rotorblatthalbschalen auf, die jeweils einen die Rotorblatthalbschalen fast ganz umlaufenden Rand aufweisen, entlang dem die beiden Rotorblatthalbschalen miteinander verklebt werden. Lediglich an einer Wurzel des Rotorblattes verbleibt eine Öffnung, über die das Rotorblatt mit einem Anschluss an einer Rotornabe befestigt werden kann. In jeder der beiden Halbschalen ist jeweils wenigstens ein Hinterkantengurt, vorzugsweise jeweils genau ein Hinterkantengurt angeordnet. Erfindungsgemäß verlaufen die Hinterkantengurte entlang des jeweiligen Hinterkantenrandes der Rotorblatthalbschale in einer Längsrichtung, und sie sind in einem Querschnitt quer, vorzugsweise senkrecht zu ihrer Längsrichtung zumindest entlang eines Abschnitts in Längsrichtung rechteckig ausgebildet. Unter rechteckig wird hier auch eine im Wesentlichen rechteckige Querschnittsform verstanden. Die Ecken können leicht abgerundet sein. Vorzugsweise ist der Querschnitt abschnittsweise rechteckig, vorzugsweise exakt rechteckig. Es kann auch ein quadratischer Querschnitt vorgesehen sein. Vorzugsweise ist der rechteckige Querschnitt so ausgebildet, dass der Hinterkantengurt zumindest entlang der überwiegenden Ausdehnung entlang seiner Breite eine in den Rotorblattinnenraum weisende gerade Innenfläche aufweist und eine Höhe des Rotorblatthinterkantengurtes entlang dieser Breite gleich ist. Der Rotorblatthinterkantengurt kann an den Längskanten jedoch abgeschrägt, abgerundet oder abgeflacht auf die Rotorblattinnenwandung verlaufend ausgebildet sein, sodass keine scharfen oder empfindlichen Kanten freiliegen. Auch die vorbezeichneten glatten Querschnitte werden hier noch als rechteckig bezeichnet, zumindest solange die gerade Innenfläche wenigstens die halbe Breite ausmacht.

Vorzugsweise liegen sich zwei Hinterkantengurte gegenüber, und jeder der beiden sich gegenüberliegenden Hinterkantengurte weist jeweils entlang eines Abschnitts, der sich in der Längsrichtung erstreckt, einen quer, vorzugsweise senkrecht zur Längsrichtung rechteckigen Querschnitt auf. Unter der Längsrichtung ist hier eine Längsrichtung des Hinterkantengurtes entlang des jeweiligen Abschnitts zu verstehen, die entlang des Hinterkantengurtes veränderlich sein kann und auch etwas von der Längsrichtung des Rotorblattes abweichen kann.

Die beiden Hinterkantengurte liegen sich gegenüber, wenn sie mit ihren breiten Innenseiten einander gegenüberliegen.

Erfindungsgemäß ist der Hinterkantengurt in dem Abschnitt, in dem der wenigstens eine Hinterkantengurt im Querschnitt rechteckig ausgeformt ist, weiter von dem ihm zugeordneten Hinterkantenrand entfernt als in anderen Abschnitten.

Günstigerweise weist eine Hinterkante des Rotorblattes in dem Abschnitt höchstens eine erste Dicke auf, und der Hinterkantengurt ist entlang des Abschnittes überall weiter von dem Hinterkantenrand beabstandet als in einem anderen Abschnitt, in dem das Rotorblatt eine größere als die erste Dicke aufweist. Unter der Dicke wird hier der Abstand zweier Punkte der Rotorblattaußenhaut senkrecht zur Rotorblattsehne oder zur Skelettlinie verstanden. Unter dem Abschnitt ist hier der Bereich zu verstehen, in dem der Hinterkantengurt vorgesehen ist. Der Hinterkantengurt ist somit dort weiter von dem ihm zugeordneten Hinterkantenrand beabstandet wo das Rotorblatt eine erste Dicke aufweist, die aber gering ist, zumindest geringer als in anderen Abschnitten, in denen der Hinterkantengurt dichter an der Hinterkante verläuft.

Vorzugsweise ist jeder der Hinterkantengurte von den ihnen zugeordneten Hinterkantenrändern so weit beabstandet ist, dass ein Mindestabstand zwischen den beiden Rotorblatthalbschalen in dem Bereich, in dem sich die Hinterkantengurte befinden, wenigstens 3 mm beträgt. Unter dem Abstand wird hier der lichte Abstand zweier Punkte der Rotorblattinnenhaut senkrecht zur Rotorblattsehne oder zur Skelettlinie verstanden. Erfindungsgemäß wird der Hinterkantengurt also mindestens abschnittsweise von der Hinterkante in Richtung Profilnase verschoben, um so ein höheres Flächenträgheitsmoment der Hinterkantengurte bezüglich der Profilsehne zu realisieren, wenn die Querschnittfläche des Hinterkantengurtes unverändert bleibt zu einer Ausführung entsprechend dem Stand der Technik. Gleichzeitig erweist es sich bei einer erfindungsgemäßen Anordnung der Hinterkantengurte im Rotorblatt als vorteilhaft für den Fertigungsablauf, den Querschnitt des Gurtes im Wesentlichen rechteckig zu gestalten.

Günstigerweise verläuft der Hinterkantengurt entlang der Hinterkante. Er kann also verschiedene Abstände von der Hinterkante entlang der Längsrichtung aufweisen. Günstigerweise ist der Hinterkantengurt dort im Querschnitt rechteckig ausgebildet, wo die die Hinterkante eine geringe Dicke aufweist. Er kann in diesen Abschnitten weiter von der Hinterkante beabstandet sein als in anderen Abschnitten.

Zusätzlich wird erfindungsgemäß eine Verbindung zwischen den gegenüberliegenden Hinterkantengurte durch einen Steg oder Stringer vorgesehen. So ergibt sich eine Anordnung, die ein deutlich verbessertes Verhältnis von eingesetzter Masse zu erzielter Beulsicherheit aufweist.

Erfindungsgemäß weist der Hinterkantengurt einen signifikant kleineren Querschnitt auf als der Hauptgurt in der gleichen Entfernung zur Blattwurzel.

Es hat sich gezeigt, dass Gurte mit einem rechteckigen Querschnitt leichter zu fertigen sind als andere Querschnittsformen. Deshalb sind die Hinterkantengurte entlang eines Abschnitts in ihrer Längsrichtung im Querschnitt rechteckig ausgebildet, wobei allerdings die Querschnittsfläche, insbesondere die Höhe des Rechteckes variieren kann.

Erfindungsgemäß sind die im Querschnitt rechteckigen Hinterkantengurte jedoch nicht mehr, wie im Stand der Technik bekannt, überall unmittelbar entlang der Rotorblatthinterkante verlegt, sondern sie weisen einen variierenden und vorzugsweise abschnittsweise größeren Abstand von der Rotorblatthinterkante auf. Insbesondere in im Querschnitt engen Bereichen der Hinterkante sind die Rotorblatthinterkantengurte weiter von dem Rotorblatthinterkantenrand beabstandet als beispielsweise im großräumigeren Wurzelbereich des Rotorblattes. Die Festlegung des Abstandes zwischen Hinterkantengurt und Hinterkante des Rotorblattes ist eine Optimierungsaufgabe, bei der die Querschnittfläche des Hinterkantengurtes und sein Abstand zur Hinterkante des Rotorblattes, welcher den Abstand der Hinterkantengurte zueinander über die Profilform festlegt, so gewählt werden müssen, dass sich ein Minimum des Verhältnisses aus eingesetzter Masse zu erzielter Beulsicherheit ergibt.

In dem mit einer geringeren Höhe des Rotorblattinnenraumes versehenen aerodynamischen Abschnitt des Rotorblattes sollte dieser größere Abstand von der Hinterkante des Rotorblattes zur Verfügung gestellt werden, damit sich die Hinterkantengurte beim Zusammenklappen der Rotorblatthalbschalen während der Fertigung nicht berühren und immer noch eine Klebverbindung zwischen den beiden Rotorblatthalbschalenrändern möglich ist. Die beiden Hinterkantengurte dürfen nicht vor den Rotorblatthalbschalenrändern aufeinanderstoßen und ein vollständiges Zusammenklappen der Rotorblatthalbschalen verhindern. Günstigerweise sind die beiden Hinterkantengurte von ihren Hinterkantenrändern so weit beabstandet, dass ein Mindestabstand von ca. 3,0 mm und ein Maximalabstand von ca. 20 mm - 50 mm zwischen den einander zugewandten Innenseiten der beiden Hinterkantengurten in Profildickenrichtung des Rotorblattes beträgt, sich die beiden Hinterkantengurte also während des Fertigungsverfahrens beim Zusammenklappen der Rotorblätter nicht berühren und sogar einen lichten Abstand voneinander aufweisen, der über einen Steg, vorzugsweise über einen Stringer überbrückt wird.

Aufgrund des Höchstabstandes der beiden Hinterkantengurte von zwischen vorzugsweise 2 cm bis 5 cm ist es sinnvoll, den Hinterkantengurt der saugseitigen mit dem Hinterkantengurt der druckseitigen Rotorblatthalbschale durch einen Stringer anstatt eines Steges zu verbinden.

Bei einem Stringer handelt es sich vorzugsweise ebenfalls um ein Faserverbundstoffbauteil, das im Querschnitt jedoch nicht wie ein Steg rechteckförmig mit einer um das Vielfache größeren Höhe als einer Breite ausgebildet ist, sondern bei dem die Höhe des Bauteils geringer ist als die Breite des Bauteils ist. So ist die Höhe des Stringers beispielsweise 2 cm bis 5 cm, während die Breite des Stringers etwa 20 cm bis 30 cm beträgt. Bauhöhe und - breite variieren aber entlang der Längsausdehnung des Rotorblattes.

In einer besonders vorteilhaften Ausführungsform der Erfindung weist der Stringer einen trapezförmigen Querschnitt auf, wodurch er gut bei der Herstellung der entsprechenden Blattschale, z. B. bei der Infusion, integriert werden kann.

Die beiden Hinterkantengurte der beiden Rotorblatthalbschalen weisen vorzugsweise eine Breite von 20 cm bis 30 cm auf. Die Breite der Hinterkantengurte ist über die gesamte Längsausdehnung des Hinterkantengurtes im Wesentlichen gleich, vorzugsweise exakt gleich. Dadurch ist eine einfache Herstellung des Hinterkantengurtes möglich. Zweckmäßigerweise ist der Hinterkantengurt aus mehreren über- und/oder nebeneinander gelegten Schichten eines Faserhalbzeugs gebildet. Bei dem Faserhalbzeug kann es sich um ein Gebilde aus Natur-, Kunststoff-, Glas- oder Kohlefasern oder Ähnliches handeln, das mit einem Harz getränkt wird und dann aushärtet. Die erfindungsgemäße Ausbildung des Rotorblattes soll aber auch andere Formen von Faserhalbzeugen wie Prepregs und Pultrudate umfassen

Die Anzahl der übereinandergeschichteten Schichten des Hinterkantengurtes wird der Anforderung an Festigkeit und Beulsicherheit im jeweiligen Rotorblattabschnitt angepasst. Vorzugsweise weisen die Hinterkantengurte eine Höhe von weniger als 1 cm an den wurzel- bzw. tipseitigen Enden und bis zu bis 7 - 10 cm an ihrer dicksten Stelle auf.

Hinsichtlich des Verfahrens wird die Aufgabe durch ein Verfahren mit den Merkmalen des Anspruchs 10 gelöst. Das Verfahren eignet sich insbesondere zur Fertigung eines der oben genannten Rotorblätter.

Rotorblätter werden vorzugsweise aus separat gefertigten Bauteilen, wie Rotorblatthalbschalen, Stegen, Stringer und Gurten, zusammengesetzt. Die separaten Bauteile werden in diesem Falle in für sie individuell bestimmten Herstellungsformen gefertigt. In die Herstellungsformen werden zunächst mehrere Schichten, beispielsweise faserhaltige Schichten aus Glas- und/oder Kohlenstofffaser und/oder Kunststoffen und/oder auch Naturstoffen sowie Schäume und Balsa usw. übereinander- und nebeneinandergelegt. Die so angeordneten Schichten bilden ein vorzugsweise trockenes Halbzeug aus. Das Halbzeug wird in Verfahren wie beispielsweise dem resin injection moulding (RIM-Verfahren) oder dem resin transfer moulding (RTM-Verfahren) mit einem Harzsystem getränkt. Nach dem Aushärten des Harzsystems werden die Bauteile zusammengeklebt und das Rotorblatt endgefertigt. Es sind aber auch Fertigungsverfahren wie der Einsatz von Prepregs und Pultrudaten in der erfindungsgemäßen Herstellung des Rotorblattes eingeschlossen. Insbesondere hinsichtlich der Herstellung der Gurte ist es nicht zur Erfindung gehörend vorgesehen, dass die Gurte bereits integraler Bestandteil der Rotorblatthalbschalen sind, also während des Herstellungsverfahrens der Rotorblatthalbschalen integral mitgefertigt werden. Sie können aber auch nachträglich auf die Innenseiten der Rotorblatthalbschalen aufgeklebt werden oder nicht zur Erfindung gehörend als vorgefertigte Bauteile bei der Herstellung der Rotorblatthalbschalen eingebracht werden.

Insbesondere die Hinterkantengurte verlaufen zweckmäßigerweise möglichst dicht an der Rotorblatthinterkante, um die Steifigkeit in Schwenkrichtung besonders stark zu erhöhen. Dabei entsteht jedoch das Problem, dass insbesondere im aerodynamischen Bereich des Rotorblattes entlang der Rotorblatthinterkante nur sehr wenig freier, insbesondere nicht sehr hoher Innenraum im Rotorblatt zur Verfügung steht. Insbesondere führt dieses dazu, dass die Rotorblatthinterkantengurte gemäß dem Stand der Technik zumindest entlang ihrer zur Rotorblatthinterkante weisenden Längsseite zur Hinterkante hin abgeflacht oder abgerundet sind, damit sie beim Zusammenklappen und Zusammenkleben der beiden Rotorblatthalbschalen nicht aufeinanderstoßen und ein vollständiges Verkleben der Rotorblatthalbschalen verhindern. Dadurch ergibt sich beim Stand der Technik eine sehr geringe, oft zu geringe Sicherheit gegen Beulen, sodass zusätzliches Material in den Hinterkantengurten vorgesehen werden muss, was das Rotorblatt verteuert.

Üblicherweise und auch erfindungsgemäß werden die Rotorblatthalbschalen in separaten Formhalbschalen gefertigt, die nebeneinander angeordnet sind und über eine gelenkige Verbindung aufeinandergeschwenkt werden können. Dieser Schwenkmechanismus ermöglicht es, die fast vollständig umlaufenden Ränder der beiden Rotorblatthalbschalen positionsgenau übereinander zu positionieren und nach Auftrag einer Klebmittelschicht entlang der beiden oder zumindest einer der beiden Ränder miteinander zu verkleben.

Vor dem Zusammenklappen der beiden Formhalbschalen werden zweckmäßigerweise auch die Stege, Stringer und Gurte in die Rotorblatthalbschalen eingeklebt.

Das erfindungsgemäße Verfahren macht von der Idee Gebrauch, die Hinterkantengurte durch vorzugsweise exaktes Übereinanderanordnen von Schichten, d. h. Faserlagen aus unterschiedlichsten Materialien zu fertigen, wobei das aus den übereinander angeordneten Schichten gebildete Halbzeug z. B. mit einem Harzsystem infundiert wird, das anschließend aushärtet. Es sind auch andere Herstellungsverfahren, wie z. B. der Einsatz von Prepregs oder Pultrudaten denkbar. Es entsteht ein rechteckförmiger Querschnitt des Hinterkantengurtes, wobei der Hinterkantengurt natürlich der aerodynamischen Form der Rotorblattinnenwandung entlang der Längsausdehnung angepasst sein muss, also insbesondere in Längsrichtung nicht exakt gerade verläuft, sondern bogenförmig der Hinterkante und der Oberfläche des Rotorblattes folgt, damit er überall in die Blattschalenstruktur integriert werden kann.

Die Hinterkantengurte weisen aber wenigstens im aerodynamischen Abschnitt einen Abstand vom Hinterkantenrand auf. Unter einem Abstand wir hier ein Abstand eines dem Hinterkantenrand benachbarten Längsrandes des Hinterkantengurtes von dem Hinterkantenrand verstanden der nicht Null sondern vorzugsweise einige Zentimeter beträgt. Es werden so viele Schichten übereinandergelegt, dass der Hinterkantengurt eine Dicke von 1 cm bis 10 cm vorzugsweise bis zu 7 - 8 cm nach der Harzinfusion aufweist.

Der Rotorblatthinterkantengurt kann einstückig oder mehrstückig ausgebildet sein, wobei die einzelnen Stücke dann aneinander in die Rotorblatthalbschalen eingeklebt und miteinander verbunden werden.

Die einzelnen Faserlagen des Rotorblatthinterkantengurtes weisen vorzugsweise eine gleiche Breite auf, sodass die Längskanten der Gewebelagen exakt übereinander positioniert werden, wobei Entformungsschrägen vorgesehen werden können.

Es hat sich gezeigt, dass bei einer gleichen Querschnittsfläche des Rotorblatthinterkantengurtes diese rechteckförmige Form eine höhere Beulsteifigkeit auch bei einem größeren Abstand von der Rotorblatthinterkante aufweist als herkömmliche, exakt entlang der Rotorblatthinterkante verlaufende Gurte mit abgeschrägten oder abgerundeten Längskanten.

Besonders bevorzugt werden die Innenseiten der sich im Rotorblattinnenraum gegenüberliegenden Hinterkantengurte mit Stringern verbunden. Stringer sind aufgrund ihrer gegenüber Stegen größeren Breite und dem vorzugsweise trapezförmigen Querschnitt einfacher beim Bau der Blattschale zu realisieren als Stege.

Die Erfindung wird anhand eines Ausführungsbeispiels in sechs Figuren beschrieben, dabei zeigen:
- Fig. 1: eine Innenansicht eines herkömmlichen Rotorblattes mit einem Hauptgurt und einem Hinterkantengurt,
- Fig. 2: eine Schnittansicht eines herkömmlichen Rotorblattes entlang einer Linie II - II der Fig. 1,
- Fig. 3: eine Schnittansicht eines Aufbaus eines Hinterkantengurtes gemäß dem Stand der Technik,
- Fig. 4: eine Innenansicht einer erfindungsgemäßen Rotorblatthalbschale mit einem Hauptgurt und einem erfindungsgemäßen Hinterkantengurt,
- Fig. 5: eine Schnittansicht eines erfindungsgemäßen Rotorblattes entlang einer Linie V - V in Fig. 4,
- Fig. 6: eine Schnittansicht des Aufbaus eines erfindungsgemäßen Hinterkantengurtes.

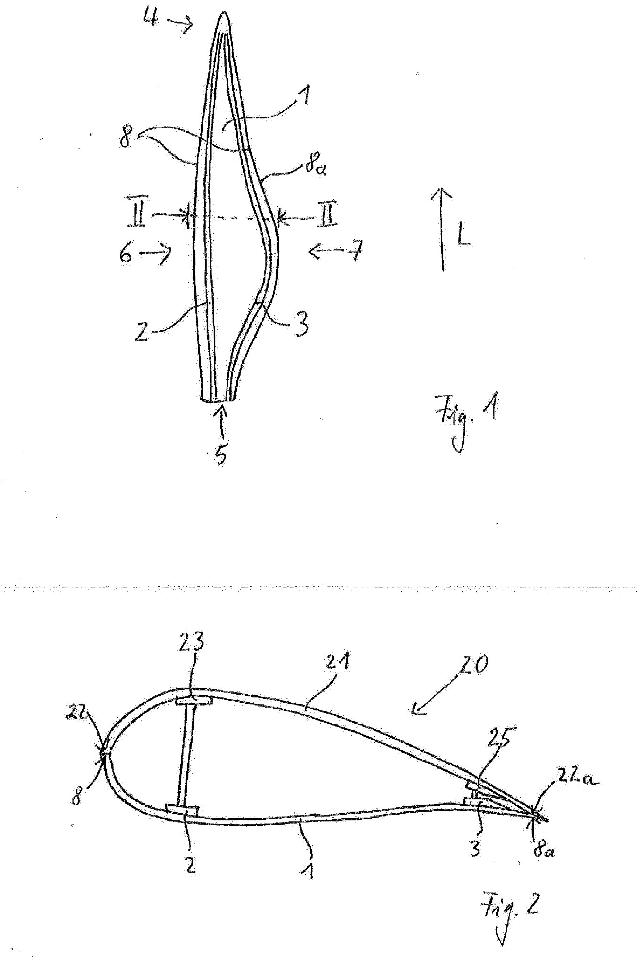

In Fig. 1 ist eine saugseitige Rotorblatthalbschale 1 eines herkömmlichen Rotorblattes dargestellt. Fig. 1 zeigt eine Innenansicht der Rotorblatthalbschale 1. Die Figuren sind nicht maßstabsgerecht.

Rotorblätter werden vorzugsweise aus separat gefertigten Bauteilen wie Rotorblatthalbschalen 1, Gurten, Stegen oder Stringern zusammengesetzt. Die separaten Bauteile werden in für sie individuell bestimmten Herstellungsformen gefertigt. In die Herstellungsformen werden zunächst mehrere Schichten, beispielsweise faserhaltige Lagen, Schäume, Balsa usw. übereinander- und/oder nebeneinandergelegt. Die so angeordneten Schichten bilden ein vorzugsweise trockenes Halbzeug aus. Das Halbzeug liegt auf einer Innenseite einer Herstellungsform und wird an der der Herstellungsform abgewandten Seite mit einer Vakuumfolie abgeklebt. Die Herstellungsform bzw. die Vakuumfolie weisen eine Mehrzahl an Eintrittsöffnungen und Austrittsöffnungen auf. Das Halbzeug wird in Verfahren, wie beispielsweise dem RIM-Verfahren (resin injection moulding) oder dem RTM-Verfahren (resin transfer moulding), mit einem Harzsystem getränkt. Dazu wird das Halbzeug unter der Vakuumfolie, d. h. zwischen Innenwandung der Herstellungsform und der Vakuumfolie unter Unterdruck gesetzt, indem durch die Austrittsöffnungen Luft abgesaugt wird. Auch durch den Unterdruck wird das flüssige bzw. zähflüssige Harzsystem in das Halbzeug eingesaugt und tränkt das Halbzeug vollständig. Das Verfahren wird so lange durchgeführt, bis auch aus den Austrittsöffnungen das Harzsystem entweicht. Es können aber auch Prepregs und/oder Pultrudate eingesetzt werden.

Gemäß dem Stand der Technik werden die Rotorblatthalbschalen 1 einzeln und jeweils in einem Stück gefertigt. Moderne Rotorblätter weisen Längen zwischen 40 m und 60 m und bis zu 75 m und sogar mehr auf. Zu ihrer Fertigung können Fertigungsformen mit entsprechenden Längen bis zu 70 m, 75 m oder sogar noch längere Fertigungsformen vorgesehen sein.

Nach dem Aushärten der Rotorblatthalbschalen 1 werden auf die Innenseite der beiden Rotorblatthalbschalen jeweils ein Hauptgurt 2 und ein Hinterkantengurt 3 geklebt. In Fig. 1 ist eine Innenseite einer der beiden Rotorblatthalbschalen eines Rotorblattes dargestellt. In Fig. 1 ist die saugseitige Rotorblatthalbschale 1 dargestellt. Es ist gemäß einer nicht beanspruchten Ausführung aber auch möglich, den

Hinterkantengurt 3 als vorgefertigtes Bauteil bei der Herstellung der Rotorblatthalbschalen in der entsprechenden Herstellungsform zu platzieren und ggf. mit der Infusion mit den anderen Schichten und Materialien zu verbinden.

Jede der Rotorblatthalbschalen 1 weist ein tipseitiges Ende 4 und ein wurzelseitiges Ende 5 auf sowie eine Vorder- 6 und eine Hinterkante 7. Die entsprechende Nomenklatur gilt auch für das aus zwei Rotorblattschalen zusammengesetzte Rotorblatt.

Die Rotorblatthalbschale 1 fast ganz umlaufend ist ein Rotorblatthalbschalenrand 8 vorgesehen, der eine Breite von vorzugsweise 3 bis 25 cm aufweist. Der Rand 8 verläuft entlang der Rotorblattvorderkante 6 um das tipseitige Ende 4 der Rotorblatthalbschale 1 herum und entlang der gesamten Rotorblatthinterkante 7 Die beiden Rotorblatthalbschalen 1 weisen jeweils den Rand 8 auf, und die Rotorblattschalen 1 werden entlang ihrer beiden Ränder 8 miteinander verklebt. Die Breite des Randes 8 kann bereichsweise variieren, wobei die Übergänge dann vorzugsweise kontinuierlich ausgeführt sind. Dazu sind die Herstellungsformen nebeneinander angeordnet, und eine klappbare Formhalbschale ist über eine positionsfeste Formhalbschale schwenkbar, so dass nach Fertigung der beiden Rotorblatthalbschalen in den beiden Formhalbschalen und deren Aushärtung sowie gegebenenfalls dem Einkleben weiterer Bauteile wie Gurte und Stege die klappbare Formhalbschale über die positionsfeste Form geklappt werden kann.

Es ist auch denkbar, dass beide Formhalbschalen gleichzeitig oder nacheinander klappbar sind und aufeinander zugeklappt werden.

Auf die in der positionsfesten Formhalbschale gefertigte Rotorblatthalbschale ist entlang des gesamten Rotorblatthalbschalenrandes 8 ein Klebmittel aufgebracht. Die beiden Rotorblatthalbschalen 1 werden entlang ihrer beiden Ränder 8 mit Hilfe des Klebmittels verklebt. Zum Zusammendrücken der beiden Formhalbschalen können Klemmverschlüsse an den Formhalbschalen vorgesehen sein, die einen hinreichenden Druck zwischen den beiden Rotorblatthalbschalen 1 und damit auf die Klebmasse erzeugen.

Entlang der Linie der größten Profildicke ist der Hauptgurt 2 verlegt. Der Hauptgurt 2 kann separat gefertigt werden oder , was nicht beansprucht ist, während des Herstellungsprozesses der Rotorblatthalbschale 1 auf der Innenseite der Rotorblatthalbschale 1 integral mitausgebildet werden.

Der Hauptgurt 2 und der Hinterkantengurt 3 weisen ebenfalls in eine Längsrichtung L verlaufende Faserlagen auf, wobei die Faserlagen der Gurte 2, 3, aber auch der Rotorblatthalbschalen 1 oder der Stege Glasfasern, Kohlefasern, kunststoffhaltigen Fasern, Naturfasern, aber auch andere Faserarten aufweisen können. Die einzelnen Faserlagen können jeweils einteilig ausgebildet sein. Es kann bei langen Gurten 2, 3 aber auch zweckmäßig sein, die Gurte 2, 3 entlang der Längsrichtung L stückweise zu fertigen und erst in der Rotorblatthalbschale 1 zusammenzusetzen. Entsprechendes gilt auch für die anderen Bauteile.

Die Gurte 2, 3 werden ebenfalls in einem Vakuuminfusionsverfahren mit Harz getränkt ausgehärtet und dann auf die Innenseite der Rotorblatthalbschale 1 aufgeklebt oder, was nicht beansprucht ist, während des Fertigungsverfahrens der Rotorblatthalbschale 1 integral mitausgeformt. Es ist in einer nicht beanspruchten Ausführung aber auch möglich, die Gurte 2, 3 vorzufertigen und dann während des Baus der Halbschale zu integrieren, in dem sie z. B. während der Infusion mit den anderen Materialien der Rotorblatthalbschale verbunden werden. Der Hauptgurt 2 dient dazu, die Biegesteifigkeit des Rotorblattes in Schlagrichtung zu erhöhen.

Die bisherigen Erörterungen betreffen nicht nur die Rohrblätter gemäß dem Stand der Technik, sondern auch die erfindungsgemäßen Rotorblätter.

Zusätzlich ist gemäß dem Stand der Technik entlang eines Rotorblatthalbschalenhinterkantenrandes 8a der Hinterkantengurt 3 verlegt. Der Hinterkantengurt 3 verläuft direkt entlang der Hinterkante 7 in einem Abstand von wenigen Zentimetern von dem Rand 8, vorzugsweise in einem Abstand von höchstens drei bis vier Zentimetern. Der Abstand des Hinterkantengurtes 3 vom Rotorblatthalbschalenhinterkantenrand 8a ist über die gesamte Längsausdehnung des Hinterkantengurtes 3 gemäß dem Stand der Technik im Wesentlichen gleich, in jedem Fall jedoch sehr gering und liegt bei wenigen Zentimetern. Der erfindungsgemäße Hinterkantengurt 3 verläuft entlang einer anderen Linie in der Rotorblatthalbsachale 1 als der bekannte Hinterkantengurt 3.

Fig. 2 zeigt einen Querschnitt eines Rotorblattes 20 gemäß dem Stand der Technik entlang einer Linie, die etwa die Höhe der in Fig. 1 eingezeichneten Querschnittslinie II - II hat. Allerdings ist in Fig. 1 nur eine Rotorblatthalbschale 1 eingezeichnet, während Fig. 2 einen Querschnitt des vollständigen Rotorblattes 20 zeigt. Die beiden Rotorblatthalbschalen 1, 21 weisen jeweils einen zugehörigen Rotorblatthalbschalenrand 8a, 22a auf, und sie sind entlang ihrer Rotorblatthalbschalenränder 8a, 22a miteinander verklebt.

Dabei liegen sich die beiden Hauptgurte 2, 23 innerhalb des Rotorblattes 20 einander in etwa parallel gegenüber. Die beiden Hauptgurte 2, 23 sind über einen Steg 24, der ebenfalls in einem Laminierverfahren separat hergestellt ist, miteinander durch zwei Klebverbindungen zwischen Steglängsseiten und Gurtinnenseiten verklebt. Der Steg 24 weist an seinen Längsseiten Klebelippen auf, die eine größere Kontaktfläche zwischen Hauptgurt 2, 23 und Steg 24 herstellen.

Da die Hinterkantengurte 3, 25 sehr dicht an dem jeweiligen Hinterkantenrand 8a, 22a angeordnet sind und auch in dem in Längsrichtung L mittleren, aerodynamischen Bereich des Rotorblatts 20 eng am jeweiligen Rotorblatthalbschalenhinterkantenrand 8a, 22a angeordnet sind, müssen die beiden Hinterkantengurte 3, 25 zum Hinterkantenrand 8a, 22a hin abgeschrägt sein, damit sich beim Aufeinanderklappen der beiden Rotorblatthalbschalen 1, 21 die beiden Hinterkantengurte 3, 25 nicht berühren, insbesondere nicht eher berühren als die beiden Rotorblatthalbschalenhinterkantenränder 8a, 22a und so eine Verklebung unmöglich machen oder zumindest behindern. In den Figuren 1 und 2 sind die beiden Hinterkantengurte 3, 25 im Querschnitt etwa halblinsenförmig oder leicht nach innen gewölbt ausgebildet.

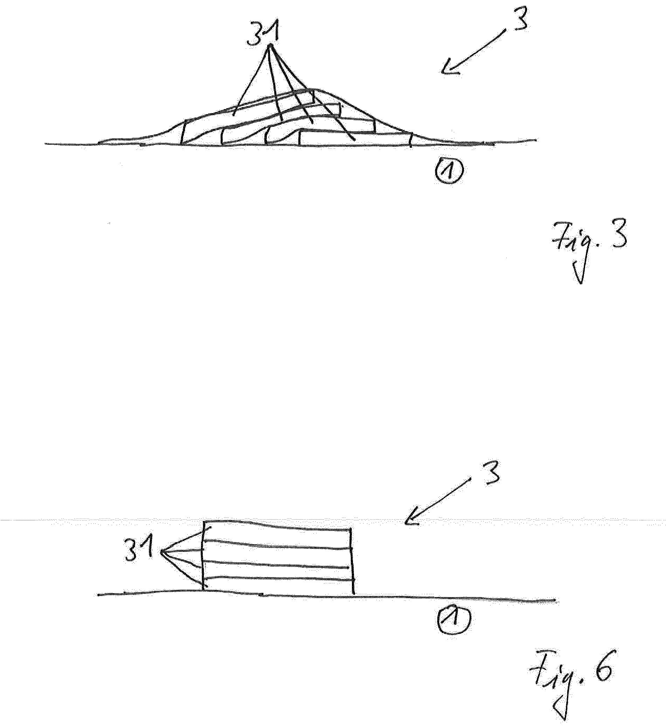

In Fig. 3 ist ein bekannter Aufbau des Hinterkantengurtes 3 gezeigt. Dabei werden in etwa gleich breite, vorzugsweise genau gleich breite Faserlagen 31 nicht exakt übereinander, sondern entlang einer Breite B des Rotorblattes 20 bzw. der Rotorblatthalbschale 1, 21 versetzt übereinandergelegt, sodass sich in einem entlang der Breite B gesehen mittleren Bereich mehr Faserlagen überlagern als an Längsrändern der Hinterkantengurte 3, 25, also je weiter man entlang der Breite in Richtung der Vorderkante 6 und der Hinterkante 7 kommt, desto jeweils weniger Faserlagen 31 überlagern einander, und somit entsteht eine im Querschnitt halblinsenförmige Form. Die halblinsenförmige Form entsteht nach der Infusion mit dem Harzsystem, indem die Faserlagen mit einem Harzsystem infundiert sind.

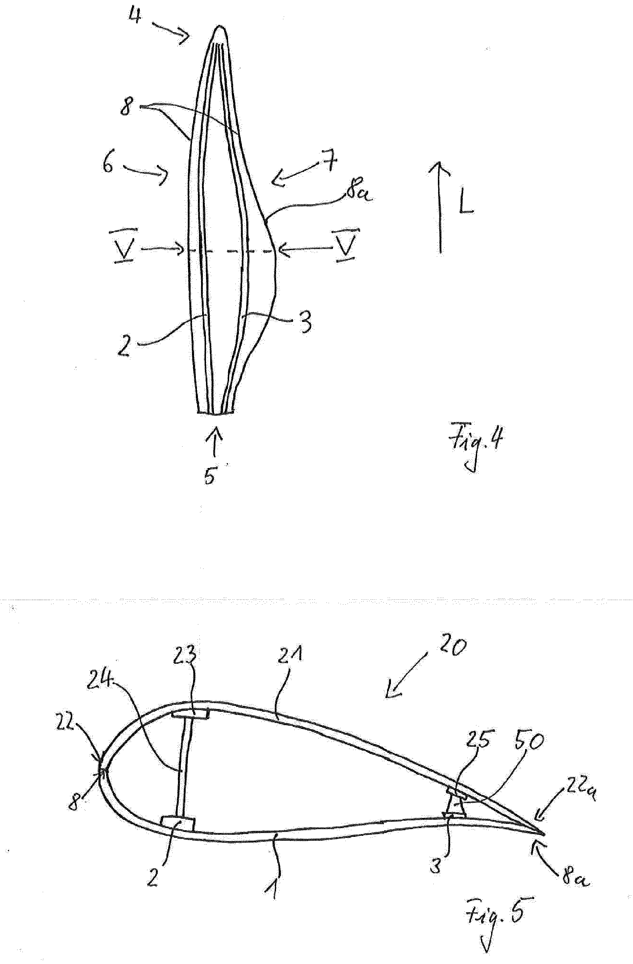

Fig. 4 zeigt eine erfindungsgemäße Rotorblatthalbschale 1. Das zu den Fig.1, 2, 3 Gesagte lässt sich bis auf die Anordnung des Hinterkantengurtes 3 auch auf das erfindungsgemäße Rotorblatt 20 übertragen. Es werden daher auch dieselben Bezugszeichen gewählt.

Die Rotorblatthalbschalen 1, 21 selbst können in einem herkömmlichen Fertigungsverfahren, z. B. im Infusionsverfahren, gefertigt werden. Ebenso können die Hauptgurte 2, 23 in bekannter Weise gefertigt werden. Die Position der beiden Hinterkantengurte 3, 25 in den beiden Rotorblatthalbschalen 1, 21 unterscheidet sich vom Stand der Technik gemäß Fig.1 und Fig. 2.

Zunächst ist der Hinterkantengurt 3 gemäß Fig. 4 nicht mehr entlang der gesamten Längsrichtung L der Rotorblatthalbschale 1 eng entlang des Hinterkantenrandes 8a geführt, sondern er weist vorzugsweise einen unterschiedlichen Abstand vom Hinterkantenrand 8a auf. In dem aerodynamischen Bereich des Rotorblattes ist der Abstand vom Hinterkantenrand 7 größer als im Bereich des wurzelseitigen Endes 5.

Fig. 5 zeigt einen erfindungsgemäßen Querschnitt eines erfindungsgemäßen Rotorblattes 20 entlang einer Linie, die in etwa auf der Höhe V - V in Figur 4 angeordnet ist, wobei in Fig. 4 eben nur eine Rotorblatthalbschale 1 dargestellt ist, während in Fig. 5 ein Querschnitt eines vollständigen Rotorblattes 20 dargestellt ist. Die beiden Hinterkantengurte 3, 25 sind im Vergleich zu Fig. 2 weiter von den Hinterkantenrändern 8a, 22a beabstandet, insbesondere sind die beiden Hinterkantengurte 3, 25 so weit von der Rotorblatthinterkante 7 beabstandet, dass sie im Querschnitt rechteckig, vorzugsweise exakt rechteckig ausgebildet sind. Der Abstand vom Rotorblatthalbschalenhinterkantenrand 8a, 22 a ist jeweils so bemessen, dass beim Aufeinanderklappen der beiden Rotorblatthalbschalen 1, 21 trotz der im Querschnitt rechteckigen Form beider Hinterkantengurte 3, 25 sich die beiden Hinterkantengurte 3, 25 nicht berühren, während sich jedoch die beiden Hinterkantenränder 8a, 22a so eng gegenüber stehen, dass sie miteinander verklebt werden können. Die beiden Hinterkantengurte 3, 25 sind mit einem Stringer 50 miteinander über Klebverbindungen verbunden.

Fig. 6 zeigt den Querschnitt einer der erfindungsgemäßen Hinterkantengurte 3, 25. Der Schichtaufbau kann in bekannter Weise gewählt sein, d. h. die Stoffart der Schichten und die Anzahl der Schichten können gemäß dem Stand der Technik wie der Aufbau in Fig. 3 gewählt sein. Es können jedoch auch gegenüber dem Stand der Technik andere Schichtfolgen und eine andere Anzahl an Schichten gewählt werden. Erfindungswesentlich ist jedoch, dass die einzelnen Schichten nicht mehr versetzt, sondern vorzugsweise exakt übereinander positioniert sind, sodass ihre seitlichen Ränder parallel übereinander und lotrecht auf der Innenseite der Rotorblatthalbschale 1 angeordnet sind. Dadurch bildet sich eine im Gegensatz zum Stand der Technik im Querschnitt im Wesentlichen rechteckige Form der Hinterkantengurte 3, 25 aus. Im Querschnitt rechteckige Hinterkantengurte 3, 25 weisen gegenüber den im Querschnitt halb ellipsenförmigen Gurten eine höhere Beulsteifigkeit bei gleicher Querschnittsfläche auf. Die Hinterkantengurte 3, 25 sind dann beulkritisch, wenn das tipseitige Ende 4 durch äußere Kräfte entgegen der Drehrichtung des Rotors in Richtung der Hinterkante 7 gebogen wird und die Hinterkante 7 dadurch unter einer Druckbelastung steht. Es hat sich gezeigt, dass bei gleicher Querschnittsfläche im Querschnitt rechteckige Hinterkantengurte 3, 25 eine höhere Beulsteifigkeit aufweisen als im Querschnitt halb ellipsenförmige Hinterkantengurte 3, 25. Durch die Erfindung lässt sich Material einsparen, ohne die Sicherheit gegen Beulen der Hinterkante bzw. der Hinterkantengurte des Rotorblattes zu verringern.

### Bezugszeichenliste

- 1: Rotorblatthalbschale
- 2: Hauptgurt
- 3: Hinterkantengurt
- 4: tipseitiges Ende
- 5: wurzelseitiges Ende
- 6: Rotorblattvorderkante
- 7: Rotorblatthinterkante
- 8: Rotorblatthalbschalenrand
- 8a: Rotorblatthalbschalenhinterkantenrand

- 20: Rotorblatt
- 21: Rotorblatthalbschale
- 22: Rotorblatthalbschalenrand
- 22a: Rotorblatthalbschalenhinterkantenrand
- 23: Hauptgurt
- 24: Steg
- 25: Hinterkantengurt

- 31: Faserlagen

- 50: Stringer

- L: Längsrichtung
- B: Breite

## Patentansprüche

1. Rotorblatt einer Windenergieanlage mit zwei Rotorblatthalbschalen (1, 21) mit jeweils einem Vorder- und einem Hinterkantenrand (8a, 22a), die entlang der Vorder- und Hinterkantenränder (8a, 22a) miteinander verklebt sind und die jeweils einen Hinterkantengurt (3, 25) aufweisen,
wobei die beiden Hinterkantengurte (3, 25) zumindest entlang eines Abschnitts in einer Längsrichtung (L) einen rechteckigen Querschnitt quer zur Längsrichtung (L) aufweisen und die beiden Hinterkantengurte (3, 25) auf eine Innenseite der Rotorblatthalbschalen (1, 21) geklebt sind und mit einem Stringer (50) miteinander über Klebverbindungen verbunden sind und ein Abstand des jeweiligen Hinterkantengurtes (3, 25) in einem aerodynamischen Bereich des Rotorblattes vom Hinterkantenrand (8a, 22a) größer ist als in einem Bereich eines wurzelseitigen Endes (5), wobei der jeweilige Hinterkantengurt (3, 25) in dem Abschnitt, in dem der Hinterkantengurt (3, 25) im Querschnitt rechteckig ausgeformt ist, weiter von dem ihm zugeordneten Hinterkantenrand (8a, 22a) entfernt ist als in anderen Abschnitten.

2. Rotorblatt nach Anspruch 1,
**dadurch gekennzeichnet, dass** die zwei Hinterkantengurte (3, 25) sich gegenüberliegen .

3. Rotorblatt nach Anspruch 1 oder 2,
**dadurch gekennzeichnet, dass** eine Hinterkante (7) des Rotorblattes (20) in dem Abschnitt höchstens eine erste Dicke aufweist und der jeweilige Hinterkantengurt (3, 25) entlang des Abschnittes überall weiter von den Hinterkantenrändern (8a, 22a) beabstandet ist als in einem anderen Abschnitt, in dem das Rotorblatt (20) eine größere als die erste Dicke aufweist.

4. Rotorblatt nach einem der vorstehenden Ansprüche,
**dadurch gekennzeichnet, dass** jeder der Hinterkantengurte (3, 25) von den ihnen zugeordneten Hinterkantenrändern (8a, 22a) so weit beabstandet ist, dass ein Mindestabstand zwischen den beiden Rotorblatthalbschalen (1, 21) in dem Bereich, in dem sich die Hinterkantengurte (3, 25) befinden, wenigstens 3 mm beträgt.

5. Rotorblatt nach einem der der vorstehenden Ansprüche,
**dadurch gekennzeichnet, dass** ein Höchstabstand zwischen den beiden Rotorblatthalbschalen (1, 21) in dem Bereich, in dem sich die Hinterkantengurte (3, 25) befinden, höchstens 5 - 6 cm beträgt

6. Rotorblatt nach einem der vorstehenden Ansprüche,
**dadurch gekennzeichnet, dass** zwischen sich gegenüberliegenden Hinterkantengurten (3, 25) mindestens abschnittsweise der Stringer (50) entlang der Längsausdehnung der beiden Hinterkantengurte (3, 25) verlaufend angeordnet ist.

7. Rotorblatt nach einem der vorstehenden Ansprüche,
**dadurch gekennzeichnet, dass** jeder der beiden Hinterkantengurte (3, 25) eine Breite (B) von 20 cm bis 40 cm, vorzugsweise eine Breite (B) von 20 cm - 30 cm aufweist.

8. Rotorblatt nach einem der vorstehenden Ansprüche,
**dadurch gekennzeichnet, dass** jeder der beiden Hinterkantengurte (3, 25) eine Höhe von 1 mm bis 80 mm aufweist.

9. Rotorblatt nach einem der vorstehenden Ansprüche,
**dadurch gekennzeichnet, dass** ein größter Abstand jeder der beiden Hinterkantengurte (3, 25) von dem Hinterkantenrand (8a, 22a) höchstens 20 cm bis 60 cm, vorzugsweise höchstens 30 cm - 45 cm beträgt.

10. Verfahren zur Fertigung eines Rotorblattes, indem
zwei Rotorblatthalbschalen (1, 21) gefertigt werden und entlang von Hinterkantenrändern (8a, 22a) beider Rotorblatthalbschalen (1, 21) jeweils ein Hinterkantengurt (3, 25) verlegt wird, der gefertigt ist, indem Schichten (31) gleicher Breite mit ihren Längsrändern übereinander positioniert werden und dann ein Harzsystem in die Schichten (31) infundiert wird, wobei nach dem Aushärten des Harzsystems die beiden Hinterkantengurte (3, 25) auf eine Innenseite der Rotorblatthalbschalen (1, 21) geklebt werden und mit einem Stringer (50) miteinander verbunden werden und der jeweilige Hinterkantengurt (3, 25) in einem aerodynamischen Bereich des Rotorblattes weiter beabstandet von dem Hinterkantenrand (8a, 22a) angeordnet wird als in einem Bereich eines wurzelseitigen Endes (5) und der jeweilige Hinterkantengurt (3, 25) in einem Abschnitt, in dem der Hinterkantengurt (3, 25) im Querschnitt rechteckig ausgeformt wird, weiter von dem ihm zugeordneten Hinterkantenrand (8a, 22a) entfernt ist als in anderen Abschnitten.

## Claims

1. Rotor blade of a wind turbine having two rotor blade half-shells (1, 21) each having a leading edge periphery and a trailing edge periphery (8a, 22a), which are bonded to one another along the leading and trailing edge peripheries (8a, 22a) and which each have a trailing edge chord (3, 25), wherein the two trailing edge chords (3, 25) have, at least along a section in a longitudinal direction (L), a rectangular cross-section transversely to the longitudinal direction (L) and the two trailing edge chords (3, 25) are adhered to an inner side of the rotor blade half-shells (1, 21) and are connected to one another by a stringer (50) via adhered connections, and a distance of the respective trailing edge chord (3, 25) in an aerodynamic region of the rotor blade from the trailing edge periphery (8a, 22a) is greater than in a region of a root-side end (5), wherein the respective trailing edge chord (3, 25) in the section in which the trailing edge chord (3, 25) is rectangular in cross-section is further away from the associated trailing edge periphery (8a, 22a) than in other sections.

2. Rotor blade according to claim 1, **characterised in that** the two trailing edge chords (3, 25) lie opposite one another.

3. Rotor blade according to claim 1 or 2, **characterised in that** a trailing edge (7) of the rotor blade (20) in the section has at most a first thickness and, along the section the trailing edge chord (3, 25) is overall further apart from the trailing edge peripheries (8a, 22a) than in another section in which the rotor blade (20) has a greater thickness than the first thickness.

4. Rotor blade according to any one of the preceding claims, **characterised in that** each of the trailing edge chords (3, 25) is at such a distance from the trailing edge peripheries (8a, 22a) associated with them that a minimum distance between the two rotor blade half-shells (1, 21) in the region in which the trailing edge chords (3, 25) are located is at least 3 mm.

5. Rotor blade according to any one of the preceding claims, **characterised in that** a greatest distance between the two rotor blade half-shells (1, 21) in the region in which the trailing edge chords (3, 25) are located is at most 5 - 6 cm.

6. Rotor blade according to any one of the preceding claims, **characterised in that** a stringer (50) extending along the longitudinal extent of the two trailing edge chords (3, 25) is arranged at least in certain sections between opposing trailing edge chords (3, 25).

7. Rotor blade according to any one of the preceding claims, **characterised in that** each of the two trailing edge chords (3, 25) has a width (B) of 20 cm - 40 cm, preferably a width (B) of 20 cm - 30 cm.

8. Rotor blade according to any one of the preceding claims, **characterised in that** each of the two trailing edge chords (3, 25) has a height of 1 mm to 80 mm.

9. Rotor blade according to any one of the preceding claims, **characterised in that** a greatest distance of each of the two trailing edge chords (3, 25) from the trailing edge periphery (8a, 22a) is at most 20 cm - 60 cm, preferably at most 30 cm - 45 cm.

10. Method for producing a rotor blade, in which two rotor blade half-shells (1, 21) are produced and a trailing edge chord (3, 25), which is produced by positioning layers (31) of constant width with their longitudinal edges one above the other and then infusing a resin system into the layers (31), is laid in each case along trailing edge peripheries (8a, 22a) of both rotor blade half-shells (1, 21), wherein after curing of the resin system the two trailing edge chords (3, 25) are adhered to an inner side of the rotor blade half-shells (1, 21) and are connected to one another by a stringer (50), and the respective trailing edge chord (3, 25) in an aerodynamic region of the rotor blade is arranged further apart from the trailing edge periphery (8a and 22) than in a region of a root-side end (5) and the respective trailing edge chord (3, 25) in a section in which the trailing edge chord (3, 25) is rectangular in cross-section is further away from the associated trailing edge periphery (8a and 22) than in other sections.

## Revendications

1. Pale de rotor d'une éolienne, comprenant deux demi-coques de pale de rotor (1, 21) pourvues respectivement d'une bordure de bord d'attaque et de bord de fuite (8a, 22a) qui sont collées ensemble le long des bordures de bord d'attaque et de bord de fuite (8a, 22a), et qui présentent respectivement une membrure de bord de fuite (3, 25),
dans laquelle les deux membrures de bord de fuite (3, 25) présentent au moins le long d'une partie dans une direction longitudinale (L) une section transversale rectangulaire transversalement à la direction longitudinale (L), et les deux membrures de bord de fuite (3, 25) sont collées sur une face intérieure des demi-coques de pale de rotor (1, 21) et sont reliées l'une à l'autre par un raidisseur (50) à l'aide d'assemblages collés, et une distance de la membrure de bord de fuite (3, 25) respective dans une zone aérodynamique de la pale de rotor par rapport à la bordure de bord de fuite (8a, 22a) est supérieure à celle dans une zone d'une extrémité côté pied (5), dans laquelle la membrure de bord de fuite (3, 25) respective dans la partie dans laquelle la membrure de bord de fuite (3, 25) est façonnée de manière rectangulaire en section transversale est plus éloignée de la bordure de bord de fuite (8a, 22a) qui lui est associée que dans d'autres parties.

2. Pale de rotor selon la revendication 1, **caractérisée en ce que** les deux membrures de bord de fuite (3, 25) sont mutuellement opposées.

3. Pale de rotor selon la revendication 1 ou 2, **caractérisée en ce qu'**un bord de fuite (7) de la pale de rotor (20) présente dans la partie au maximum une première épaisseur, et la membrure de bord de fuite (3, 25) respective est espacée le long de la partie partout plus loin des bordures de bord de fuite (8a, 22a) que dans une autre partie dans laquelle la pale de rotor (20) présente une épaisseur supérieure à la première épaisseur.

4. Pale de rotor selon l'une quelconque des revendications précédentes, **caractérisée en ce que** chacune des membrures de bord de fuite (3, 25) est éloignée des bordures de bord de fuite (8a, 22a) qui lui sont associées à tel point qu'une distance minimale entre les deux demi-coques de pale de rotor (1, 21) mesure au moins 3 mm dans la zone dans laquelle se trouvent les membrures de bord de fuite (3, 25).

5. Pale de rotor selon l'une quelconque des revendications précédentes, **caractérisée en ce qu'**une distance maximale entre les deux demi-coques de pale de rotor (1, 21) mesure au maximum 5 à 6 cm dans la zone dans laquelle se trouvent les membrures de bord de fuite (3, 25).

6. Pale de rotor selon l'une quelconque des revendications précédentes, **caractérisée en ce qu'**entre des membrures de bord de fuite opposées (3, 25), le raidisseur (50) est disposé au moins par endroits en s'étendant le long de l'extension longitudinale des deux membrures de bord de fuite (3, 25).

7. Pale de rotor selon l'une quelconque des revendications précédentes, **caractérisée en ce que** chacune des deux membrures de bord de fuite (3, 25) présente une largeur (B) de 20 cm à 40 cm, de préférence une largeur (B) de 20 cm à 30 cm.

8. Pale de rotor selon l'une quelconque des revendications précédentes, **caractérisée en ce que** chacune des deux membrures de bord de fuite (3, 25) présente une hauteur de 1 mm à 80 mm.

9. Pale de rotor selon l'une quelconque des revendications précédentes, **caractérisée en ce qu'**une distance maximale de chacune des deux membrures de bord de fuite (3, 25) par rapport à la bordure de bord de fuite (8a, 22a) mesure au maximum de 20 cm à 60 cm, de préférence au maximum de 30 cm à 45 cm.

10. Procédé de fabrication d'une pale de rotor en ce que deux demi-coques de pale de rotor (1, 21) sont fabriquées, et le long des bordures de bord de fuite (8a, 22a) des deux demi-coques de pale de rotor (1, 21) respectivement une membrure de bord de fuite (3, 25) est posée qui est fabriquée en ce que des couches (31) de largeur identique sont superposées avec leurs bordures longitudinales, et ensuite un système de résine est infusé dans les couches (31), dans lequel, après le durcissement du système de résine, les deux membrures de bord de fuite (3, 25) sont collées sur une face intérieure des demi-coques de pale de rotor (1, 21) et reliées ensemble par un raidisseur (50), et la membrure de bord de fuite (3, 25) respective est disposée dans une zone aérodynamique de la pale de rotor à une plus grande distance de la bordure de bord de fuite (8a, 22a) que dans une zone d'une extrémité côté pied (5), et la membrure de bord de fuite (3, 25) respective dans la partie dans laquelle la membrure de bord de fuite (3, 25) est façonnée de manière rectangulaire en section transversale est plus éloignée de la bordure de bord de fuite (8a, 22a) qui lui est associée que dans d'autres parties.
